# EUROPÄISCHE PATENTANMELDUNG

(11) **EP 1 841 194 A1**
(43) Veröffentlichungstag der Anmeldung: **03.10.2007**
(21) Anmeldenummer: 06111763.6
(22) Anmeldetag: 27.03.2006
(51) Int. Cl.: H04M 15/00, H04L 29/06

(54) **Vergebührung von "Push-to-Talk over Cellular"- Diensten**

(71) Anmelder: NOKIA SIEMENS NETWORKS GMBH & CO. KG, 81541 München (DE)
(72) Erfinder: Fahrthofer, Martin, 1030, Wien (AT)
(74) Vertreter: Berg, Peter

(57) **Zusammenfassung**

Die Erfindung betrifft ein Verfahren zur Vergebührung von "Push-to-Talk over Cellular" - Diensten von IP Multimedia Subsystemen in Mobilfunknetzen, bei dem Nachrichten des Real Time Control Protocols (RTCP) zur Übertragung der vergebührungsrelevanten Information herangezogen werden.

Damit kann insbesondere die Information über die Zahl der versandten Duplikate eines Talk Bursts für die Vergebührung herangezogen werden.

## Beschreibung

### Technisches Gebiet

Die Erfindung betrifft ein Verfahren zur Vergebührung von "Push-to-Talk over Cellular" - Diensten von IP Multimedia Subsystemen in Mobilfunknetzen.

### Stand der Technik

Als "Push-to-Talk over Cellular" (PoC) wird ein Dienst in Mobilfunknetzen bezeichnet, der eine schnelle und einfache Sprachkommunikation nach dem Walkie-Talkie-Prinzip ermöglicht. Damit kann mit nur einem Tastendruck über das Mobiltelefon eine Sprachnachricht an einen oder mehrere Empfänger gesendet werden.

Dabei wird auf der Basis eines "IP Multimedia Subsystems" (IMS) zwischen den Teilnehmern einer PoC-Gruppe eine packetvermittelnde Mobilfunkverbindung aufgebaut. Die Sprachnachrichten werden in Datenpakete, die so genannten "Talk Bursts" zerlegt und an die weiteren Teilnehmer der PoC-Gruppe versandt.

Von Seiten des Netzwerkes sind so genannte PoC-Server in die Kommunikation eingebunden, welche "Controlling PoC-Function" wie die Verbindungssteuerung beispielsweise mittels SIP-Protokoll und die Duplikation der Datenpakete nach der Anzahl der Teilnehmer, sowie "Participating PoC-Function" wie die Verwaltung der Teilnehmerdaten und die Vergebührung übernehmen.

Dabei ist es wünschenswert, für die Vergebührung dieses Dienstes insbesondere auch die Anzahl der Duplikate eines "Talk Bursts" zu berücksichtigen.

### Darstellung der Erfindung

Der Erfindung liegt die Aufgabe zugrunde, ein Verfahren anzugeben, mit dem die Vergebührung von "Push-to-Talk over Cellular" - Diensten verbessert werden kann.

Erfindungsgemäß geschieht dies mit einem Verfahren der eingangs genannten Art, bei dem Nachrichten des Real Time Control Protocols zur Übertragung der vergebührungsrelevanten Information herangezogen werden.

Das Real Time Control Protocol dient der Aushandlung und Einhaltung von Quality of Service Parametern durch den periodischen Austausch von Steuernachrichten zwischen Sender und Empfänger.

Eine vorteilhafte Ausgestaltung des erfindungsgemäßen Verfahrens wird dadurch erzielt, dass von einem controlling PoC-Server die Information über die Zahl der versandten Duplikate eines Talk Bursts in eine Nachricht des Real Time Control Protocols eingefügt werden und das diese Nachricht an einen participating PoC-Server des jeweils aktiven Teilnehmers übersandt wird und dass die Information über die Zahl der Duplikate eines Talk Bursts zur Ermittlung der Vergebührung herangezogen wird.

In einen "Push-to-Talk over Cellular" - Dienst sind von Seiten des Netzwerkes controlling PoC-Server und participating PoC-Server in die Kommunikation eingebunden.

Die controlling PoC-Server sind für das Management der Kommunikation innerhalb der PoC-Gruppe und damit auch für die Duplikation eines Talk Bursts zuständig, während mittels participating PoC-Server die Vergebührung erfolgt. Damit nun auch die Zahl der Duplikate eines Talk Bursts zur Ermittlung der Vergebührung herangezogen werden kann, wird nun erfindungsgemäß diese Information mittels RTCP Nachricht vom controlling PoC-Server zu den participating PoC-Servern übertragen.

Vorteilhaft ist es weiterhin, wenn die Zahl der versandten Duplikate eines Talk Bursts in einen RTCP-Receiver Report des Real Time Control Protocols eingefügt werden.

Günstig ist es überdies, wenn vom controlling PoC-Server ein RTCP-Receiver Report an einen participating PoC-Server erst dann versendet wird, wenn von den Adressaten der versandten Duplikate eines Talk Bursts eine Rückmeldung über den erfolgreichen Empfang vorliegt.

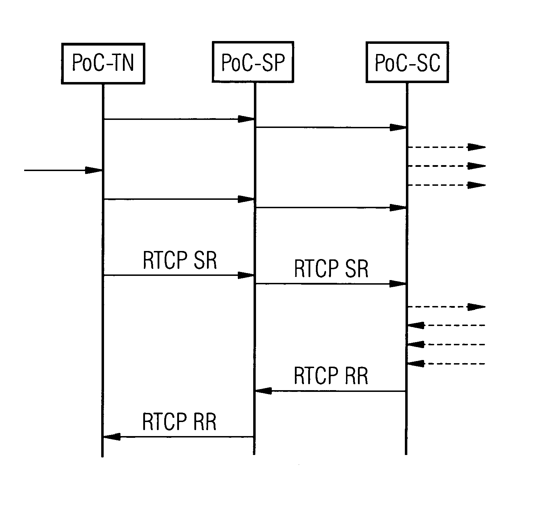

### Kurzbeschreibung der Zeichnung

Die Erfindung wird anhand einer Figur näher erläutert, welche beispielhaft den Ablauf eines erfindungsgemäßen Nachrichtenaustauschs zur Vergebührung eines Push to Talk over Cellular (PoC) - Dienstes zeigt.

### Ausführung der Erfindung

Die gegenständliche Erfindung betrifft die Vergebührung von Push to Talk over Cellular (PoC) - Diensten. Dabei handelt es sich um einen Mobilfunk-Dienst, der eine Sprachkommunikation nach dem Vorbild der Kommunikation mittels Funkgeräten (Walkie Talkie) ermöglicht. Genauso wie beim klassischen Funkgerät muss man auch bei einem PoC-Endgerät eine Taste drücken, um per Funk zu den Teilnehmern einer PoC-Gruppe sprechen zu können. Wird diese Taste nicht gedrückt, so kann der Teilnehmer nur zuhören. Push to Talk over Cellular ist somit ein Halbduplex-Übertragungsverfahren. Im Gegensatz zum herkömmlichen Funk besteht aber bei Push to Talk over Cellular die Möglichkeit, Gruppen zu bilden, sodass die Kommunikation nur innerhalb einer bestimmten Gruppe erfolgt.

Weiterhin funktioniert ein Push to Talk over Cellular -Dienst dank der Roamingmöglichkeit von Mobilfunknetzen über große Gebiete hinweg.

Vergebührt wird bei diesem Dienst lediglich der Zeitraum, in dem gesprochen wird, bzw. in dem die PoC-Taste gedrückt wird. Allerdings soll bei der Höhe der Gebühr auch die Zahl der Teilnehmer berücksichtigt werden, an die das Sprachsignal auch tatsächlich gesendet wird. Da aber die Zahl der Teilnehmer stark variieren kann, da nicht alle registrierten Mitglieder einer PoC-Gruppe jederzeit an dem Dienst teilnehmen, ist die Ermittlung der tatsächlichen Teilnehmer für die Vergebührung notwendig.

Erfindungsgemäß erfolgt dies nun dadurch, dass der jeweilige controlling PoC-Server, der die in einer Kommunikation notwendigen Duplikate der talk bursts herstellt, die Information über die Zahl dieser Duplikate an die participating PoC-Server weiterleitet, welche die Vergebührung vornehmen.

Dies ist besonders bei PoC-Gruppen wesentlich, bei denen die Teilnehmer und somit auch controlling PoC-Server und participating PoC-Server unterschiedlichen Netzen angehören.

Dazu werden Nachrichten des Real Time Control Protocols verwendet, welches an sich für den periodischen Austausch von Steuernachrichten zwischen Sender und Empfänger zur Aushandlung und Einhaltung von Quality of Service Parametern vorgesehen ist.

Nach dem Stand der Technik ist die Verwendung des Real Time Control Protocols optional.

Erfindungsgemäß sollen nun RTPC-Nachrichten bei jeder Kommunikation in einer PoC-Gruppe zwischen einem Sender und den Empfängern ausgetauscht werden und von controlling PoC-Server und participating PoC-Server zur Information über die Zahl der angefertigten und versandten Duplikate verwendet werden.

Der Ablauf des erfindungsgemäßen Nachrichtenaustausches ist dabei wie folgt:
Nach Beendung einer Sprechphase - ausgelöst durch Loslassen der Sprechtaste - wird vom Endgerät PoC-TN des jeweiligen Teilnehmers neben der Information "Talk Burst Release" TBS auch ein RTCP-Sender Report RTCP SR an den zugeordneten participating PoC-Server PoC-SP übersandt. Die Nachricht wird vom controlling PoC-Server (PoC-SC) mittels RTCP-RR Receiver Report RTCP RR, beantwortet.

In die Antwort ist die Anzahl der vom controlling PoC-Server PoC-SC duplizierten Talk Bursts eingebunden. Diese Information wird vom participating PoC-Server PoC-SP des sendenden Endgerätes ausgewertet und zur Vergebührung herangezogen.

Danach wird die Information aus der RTCP-Nachricht entfernt, bevor diese zur Auswertung der Übertragungsqualität entsprechend ihrem ursprünglichen Verwendungszweck an das Endgerät PoC-TN des jeweiligen Teilnehmers weitergeleitet wird.

In einer erweiterten Ausführung der Erfindung wird zwischen dem controlling PoC-Server PoC-SC und den empfangenden Teilnehmern ebenfalls eine Kommunikation nach dem RTCP-Protokoll aufgebaut und damit die Zahl der tatsächlich empfangenen Talk Bursts ermittelt. Diese Zahl kann dann anstelle der Zahl der Duplikate zur Vergebührung herangezogen werden.

## Patentansprüche

1. Verfahren zur Vergebührung von "Push-to-Talk over Cellular" - Diensten von IP Multimedia Subsystemen in Mobilfunknetzen, **dadurch gekennzeichnet, dass** Nachrichten des Real Time Control Protocols (RTCP) zur Übertragung der vergebührungsrelevanten Information herangezogen werden.

2. Verfahren nach Anspruch 1, **dadurch gekennzeichnet, dass** von einem controlling PoC-Server (PoC-SC)die Information über die Zahl der versandten Duplikate eines Talk Bursts TB in eine Nachricht des Real Time Control Protocols (RTCP) eingefügt werden und das diese Nachricht an einen participating PoC-Server (PoC-SP)des jeweils aktiven Teilnehmers (PoC-TN) übersandt wird und dass die Information über die Zahl der Duplikate eines Talk Bursts (TB) zur Ermittlung der Vergebührung herangezogen wird.

3. Verfahren nach Anspruch 2, **dadurch gekennzeichnet, dass** die Zahl der versandten Duplikate eines Talk Bursts in einen RTCP-Receiver Report (RTPC RR) des Real Time Control Protocols (RTCP) eingefügt werden.

4. Verfahren nach Anspruch 3, **dadurch gekennzeichnet, dass** vom controlling PoC-Server (PoC-SC) ein RTCP-Receiver Report (RTPC RR)an einen participating PoC-Server (PoC-SP) erst dann versendet wird, wenn von den Adressaten der versandten Duplikate eines Talk Bursts eine Rückmeldung über den erfolgreichen Empfang vorliegt.
